# EUROPEAN PATENT APPLICATION

(11) **EP 1 108 904 A2**
(43) Date of publication of application: **20.06.2001**
(21) Application number: 00309879.5
(22) Date of filing: 07.11.2000
(51) Int. Cl.: F16C 13/00, B29C 43/46, B29C 59/04

(54) **Plastics processing cylinder having a composite inner sleeve**

(30) Priority: 30.11.1999 US 451377; 29.12.1999 US 474729; 17.08.2000 US 641057
(71) Applicant: Otani, Tony U., Cerritos, California 90703 (US)
(72) Inventor: Otani, Tony U., Cerritos, California 90703 (US)
(74) Representative: Cummings, Sean Patrick

(57) **Abstract**

A plastics forming cylinder composed of a composite inner sleeve and an outer backing cylinder which concentrically receives therein the composite inner sleeve and serves as a backing therefor. The composite inner sleeve includes an inner layer and a concentrically disposed outer layer. The inner layer is composed of materials having high performance unattainable by the centrifugal casting methodology, as for example sintered or hot isostatic pressed (HIPed) carbides with between about 88 to about 94 percent carbides, or for example cermets of various carbides or ceramic composites. The outer layer serves as a backing for the inner layer and is preferably fabricated via a static casting around the inner layer, or in the form of a tubing having an inner layer material cast or sintered therein, or via casting in between the inner layer and the outer backing cylinder. Since the outer backing cylinder need not be subject to the high temperatures associated with the centrifugal casting method, it can be composed of any suitable heat treated alloy, such as steel alloy, or even bronze alloy. Preferably, the inner sleeve and the outer backing cylinder are assembled by sliding action, wherein the inside diameter of the outer backing cylinder is greater than the outside diameter of the inner sleeve when cold (ie., at or below room temperature), but wherein the diameters cross-over before reaching work processing temperatures, thereby providing a shrink-fit therebetween, or alternatively the outer layer can be cast in between the inner layer and the outer backing cylinder.

## Description

### BACKGROUND OF THE INVENTION

### 1. Field of the invention:

The present invention is related to plastics processing machine components, particularly cylinders used therefor. Still more particularly, the present invention relates to a plastics forming cylinder having a composite inner sleeve and an outer backing cylinder for backing the inner sleeve.

### 2. Description of the Prior Art:

Plastics processing cylinders, such as used for the heating of plastics during injection molding and extrusion processes, chemical processes, and food processing, are subjected to high temperatures, wear and corrosion attack from the materials being processed. Further, screws used for processing work material (as for example plastic) cause galling as the screw rotates within the cylinder. Additionally, such cylinders must also exhibit high strength, on the order of withstanding 30,000 psi at 1,000 degrees F. Still further, such cylinders must be cost effective and yet be highly resistant to failure when exposed to wear, corrosion, high pressure and high temperature.

Since there is no material known which meets all of the above requirements, the art has adopted the following manufacturing techniques.

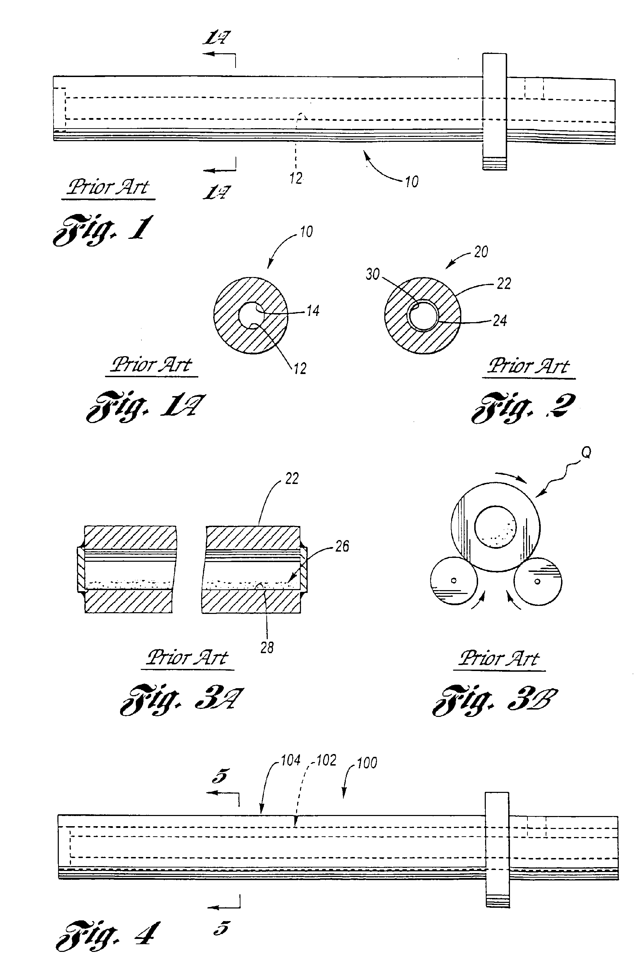

A first technique is known as a "nitrided cylinder". As shown at Figures 1 and 1 A, a solid, single piece cylinder 10 is provided, composed of nitrided steel. The inside surface 12 of the cylinder 10 is nitrided and then machine polished to provide a nitrided skin 14, typically about 0.010 inches thick. Problematically, the nitrided skin 14 is easily spalled off, has poor corrosion resistance, and has high manufacturing cost for larger size cylinders.

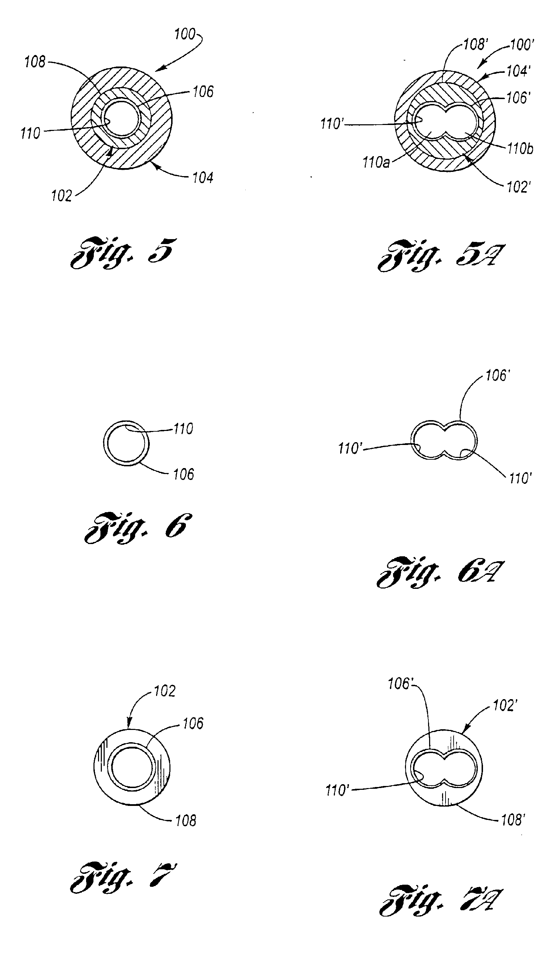

A second technique is known as a "bimetallic cylinder", and is the most popular technique. As shown at Figure 2, a composite cylinder 20 is provided having an outside layer 22 composed of a high strength steel, and an inside layer 24 composed of an inlay alloy metallurgically bonded thereto and typically about 0.065 inches thick, and wherein the outside layer 22 serves as a backing for the inside layer 24.

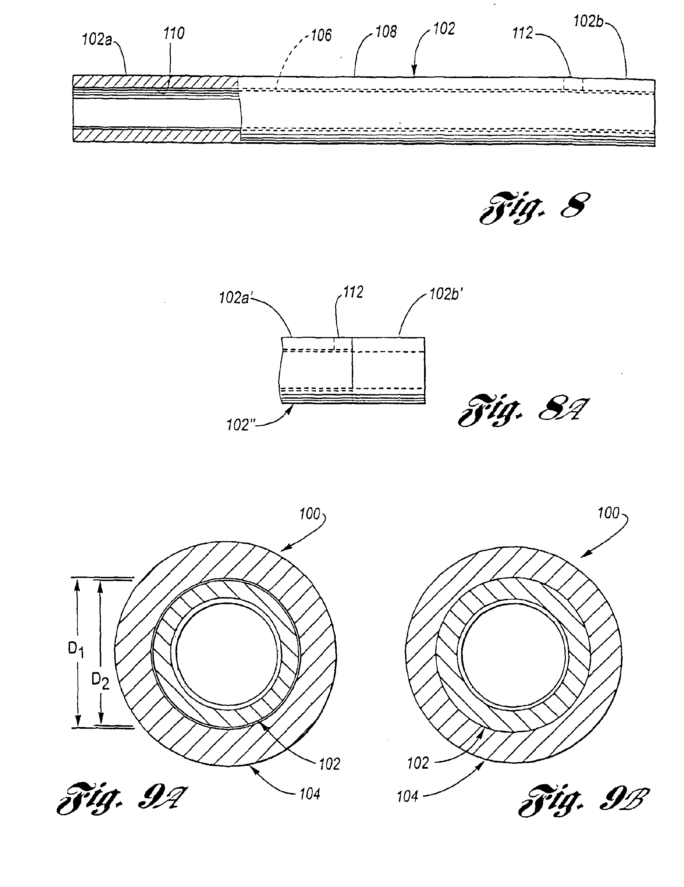

The centrifugal casting process used for forming the inside layer 22 is shown at Figures 3A and 3B. An inlay alloy material in the form of shots, ingots or powder 26 is distributed along the inside surface 28 of the outside layer 22. Then, the outside layer 22 is slowly rotated and heat Q is applied to achieve a temperature above 2,200 degrees F The outside layer 22 is then spun at room temperature to provide, for example, a centrifugal force of over 70G's. During this process, the inlay alloy melts and forms a uniform coating, which upon cooling, provides the inner layer 24. Typical inlay alloys are: Fe-Ni-B, having a hardness of Rc 60-65, and having good wear resistance, but poor corrosion resistance; Co-Ni-B, having a hardness of Rc 48-55, and having good corrosion resistance, but poor resistance to abrasion; and, carbides, mostly with tungsten carbide powder bound by a Ni-Cr-B matrix alloy with a lower melting point, as described in U.S. Patents 3,836,341 and 4,430,389, which inlay alloy is superior to the first two inlay alloys.

There are several disadvantages of the bimetallic cylinder technique.

Firstly, the steel of the outside layer 22 is often superheated to about between 2,400 degrees F and 2,600 degrees F, exceeding its maximum austenitizing temperature and thereby resulting in excess crystal grain growth and other inferior properties. The metal cannot be quenched and tempered for optimum mechanical properties, as these would cause the inlay alloy to crack.

Secondly, the inlay alloy is loaded inside the outside layer (or cylinder), which is sealed, heated and rotated. The melting point of the inlay alloy must be less than 2,100 degrees F, and therefore must be a boron-silicon alloy, which produces a higher hardness but suffers from being very brittle, having low strength at about 5,000 psi tensile. There are other inlay alloys that have higher performance, but the melting points exceed 2,100 degrees F.

Thirdly, the inside surface 30 of the inside layer 24 must have a mirror-like finish in order to produce contamination free products. However, the centrifugal casting process frequently produces pinhole and/or crack defects at he inside surface 30 which result in reprocessing costs or scrappage.

Accordingly, what remains needed in the art is a plastic processing cylinder construction which is free of the above recounted disadvantages.

### SUMMARY OF THE INVENTION

The present invention is a plastics forming cylinder composed of a composite inner sleeve and an outer backing cylinder which concentrically receives therein the composite inner sleeve and serves as a backing therefor.

The composite inner sleeve includes an inner layer and a concentrically disposed outer layer. The inner layer is composed of materials having high performance (ie., high resistance to wear and corrosion) which are unattainable by the centrifugal casting methodology, as for example sintered, hot isostatic pressed (HIPed) carbides with between about 88 to about 94 percent carbides, or heat atmosphere controlled carbide rich cermets, and other materials, such as for example ceramic composites. The outer layer serves as a backing for the inner layer and to create a larger thermal expansion than the outer backing cylinder and is preferably fabricated via a static casting around the inner layer, or in a form of tubing and having an inner layer sintered or cermet cast at the inside diameter, or via casting in between the inner layer and the outer backing cylinder.

Since the outer backing cylinder need not be subject to the high temperatures associated with the centrifugal casting method, it can be composed of any suitable heat treated alloy, or low alloy, high strength steel, or even bronze alloy. The outer backing cylinder has a coefficient of thermal expansion on in the range of about 10.0x10⁻⁶ inch/inch/°C to about 12.5x10⁻⁶ inch/inch/°C, which coefficient of thermal expansion is less than that of the outer layer of the inner sleeve, and, preferably, the outer backing cylinder has a high thermal conductivity.

It is preferred to assemble the inner sleeve and outer backing cylinder mechanically, wherein the inside diameter of the outer backing cylinder is greater than the outside diameter of the inner sleeve when cold (ie., at or below room temperature), but wherein the diameters cross-over before reaching work processing temperatures, thereby providing a shrink-fit therebetween. Further, it is preferred for the material of the outer layer of the inner sleeve to have a modulus of elasticity about equal to that of the material of the outer backing cylinder, in the range of about 20x10⁶ psi to about 30x10⁶ psi.

Alternatively to the above assembly by sliding method, the outer layer may be cast in between the inner layer and the outer backing cylinder. While the assembly by sliding method has a servicing advantage in that the inner sleeve is separable from the outer backing cylinder, by casting the outer sleeve in between the inner sleeve and the outer backing cylinder fabrication costs are lowered.

Accordingly, it is an object of the present invention to provide a plastics processing cylinder having a composite inner sleeve backed by an outer backing cylinder which is structurally superior to conventional plastic processing cylinders.

It is another object of the present invention to provide a plastics processing cylinder having a composite inner sleeve backed by an outer backing cylinder, wherein an inner layer of the inner sleeve may be composed of a wide variety of highly wear and corrosion resistant inlay alloys.

It is a further object of the present invention to provide a plastics processing cylinder wherein the fabrication process begins with the inner layer which layer is most prone to defect, wherein defects are detected before further processing costs have been incurred.

It is an additional object of the present invention to provide a plastics processing cylinder in which a wide variety of suitable materials may be used for the outer backing cylinder, including providing higher strength, reduced wall thickness, and higher thermal conductivity.

It is yet another object of the present invention to provide a plastics processing cylinder, wherein the inner sleeve can be easily removed from the outer backing cylinder so that servicing or replacement is facilitated, thereby reducing maintenance cost and providing easy adaptability for different work materials and screw materials.

It is still a further object of the present invention to provide a plastics processing cylinder, wherein materials used are readily available from customary materials treatment vendors.

These, and additional objects, advantages, features and benefits of the present invention will become apparent from the following specification.

### BRIEF DESCRIPTION OF THE DRAWINGS

Figure 1 is a side view of a prior art plastics processing cylinder fabricated according to the nitrided cylinder technique.

Figure 1A is a sectional view taken along line 1A-1A of Figure 1.

Figure 2 is a sectional view taken similarly to that of Figure 1 A for a prior art plastics processing cylinder fabricated according to the bimetallic cylinder technique.

Figures 3A and 3B schematically depict two stages of the prior art centrifugal casting method used in conjunction with the bimetallic cylinder technique of fabrication.

Figure 4 is a side view of a plastics processing cylinder fabricated according to the present invention.

Figure 5 is a sectional view seen along line 5-5 of figure 4.

Figure 5A is a sectional view of a twin bore plastics processing cylinder according to the present invention.

Figure 6 is an end view of an inner layer of the inner sleeve of Figure 5.

Figure 6A is an end view of an inner layer of the inner sleeve of Figure 5A

Figure 7 is an end view of the inner and outer layers of the inner sleeve of Figure 5.

Figure 7A is an end view of the inner and outer layers of the inner sleeve of Figure 5A.

Figure 8 is a partly sectional side view of the inner sleeve of Figure 5.

Figure 8A is fragmented view of an inner sleeve having an alternative construction from that depicted at Figure 8.

Figures 9A and 9B show shrink fit assembly of the inner sleeve and outer backing cylinder.

### DETAILED DESCRIPTION OF THE PREFERRED EMBODIMENT

Referring now to Figures 4 through 9B, various aspects of the plastics processing cylinder according to the present invention is depicted.

As shown at Figures 4 and 5, the plastics processing cylinder 100 according to the present invention is composed of a composite inner sleeve 102 and an outer backing cylinder 104, wherein the outer backing cylinder concentrically receives the inner sleeve so as to provide a backing therefor. As shown at Figure 5, the composite inner sleeve 102 includes an inner layer 106 and a cylindrical outer layer 108, wherein the inner layer is concentrically disposed within the outer layer as an integrated unit. The inner surface 110 of the inner layer 106 is mirror-like finished to provide excellent work product during injection molding or extrusion processes. By way of example only, the inner layer 106 could have a thickness of about 0.065 inches, the outer layer 108 could have a thickness of from about 0.20 inches to about 0.50 inches, and the outer backing cylinder could have a thickness of about 3/4 of an inch to about 4.0 inches for an inner layer diameter of about 3/4 of an inch to about 6 inches.

As shown at Figure 5A, an alternative plastics processing cylinder 100' is depicted having an inner sleeve 102' that is concentrically received into an outer backing cylinder 104', wherein the inner sleeve 102' has an inner layer 106' and an outer layer 108', and wherein the inner surface 110' defines twin, mutually communicating, bores 110a, 110b. The inner surface 110' is mirror-like finished to provide excellent work product during injection molding or extrusion processes during which dual screws are used.

By comparison with the inner sleeve configurations of Figures 5 and 5A, those ordinarily skilled in the art will appreciate that the present invention is fully applicable to other configurations than those shown.

The inner layer 106, 106' is composed of materials selected to have high wear and corrosion resistance which are unattainable using the centrifugal casting methodology of the bimetallic cylinder technique of fabrication. Preferred materials for the inner layer 106, 106' include, for example, sintered or hot isostatic pressed (HIPed) carbides with between about 88 to about 94 percent carbides, atmosphere controlled carbide rich cermets formed by a centrifugal casting process or by a static casting process, or materials formed by high performance alloy casting (not limited to a maximum melting point of 2,100 degrees F) and other materials, such as for example ceramic composites, tungsten carbide being the most preferred material.

According to a preferred method of manufacture according to the present invention, the inner layer 106, 106' is formed firstly, as shown at Figures 6 and 6A. The inner surface 110, 110' is polished to provide the aforementioned mirror-like finish. Upon fabrication, the inner layer 106, 106' is inspected for defects, which are either repaired or the defective inner layer is scrapped. Since defects are most critical in the polish of the inner surface, such defects are detected at the first stage of fabrication of the plastics forming cylinder 100, 100'.

The outer layer 108, 108' serves as a backing for the inner layer 106, 106' and is preferably fabricated via a static casting around the inner layer made of a solid cylinder and having an inner layer 106, 106' cast inside, or via casting in between the inner layer 106, 106' and the outer backing cylinder 104, 104'. Preferred materials for the outer layer 108, 108' include 60Ni-24Fe-16Cr, 35Ni-45Fe-20Cr, 10Ni-18Cr-Fe, or manganese bronze, wherein the materials, respectively, have a coefficient of thermal expansion in the range of about 15.0x10⁻⁶ inch/inch/°C to about 22x10⁻⁶ inch/inch/°C. The resulting composite inner sleeve 102, 102' is shown at Figures 7 and 7A.

Referring now to Figure 8 (which depicts, by way of example, the inner sleeve 102 of Figure 5), an inward portion 102a of the inner sleeve 102 which is inwardly disposed from the hopper inlet 112 is subjected to work product wear and corrosion, and the materials recounted above solve this problem. An outward portion 102b of the inner sleeve which is outwardly disposed from the hopper inlet 112 is not subject to material wear and corrosion, but is subject to galling by the screw. Accordingly, as shown at Figure 8A, the outward portion 102b' may be composed of a suitable low friction material for this purpose, as for example an iron-bronze sintered alloy, wherein the inward portion 102a' is fabricated as a composite inner sleeve 102" and the outward portion 102b' is connected thereto such as for example by brazing, welding, or by being mechanically supported and bound by the outer layer of the inner sleeve.

Since the outer backing cylinder 104, 104' does not need to be subjected to the very high temperatures (2,100 degrees F to 2,300 degrees F) associated with the centrifugal casting method of the bimetallic cylinder technique of fabrication, the outer backing cylinder can be composed of any suitable heat treated alloy, such as low alloy, high strength steel, or where thermal conductivity is critical, a high strength bronze alloy may be used. Preferred materials for the outer backing cylinder should have a lower thermal expansion coefficient (than that of the outer layer) in the range of about 10.0x10⁻⁶ inch/inch/°C to about 12.5x10⁻⁶ inch/inch/°C, and include AISI 4140 or other low alloy, high strength steels.

According to an aspect of the present invention, it is preferred to assemble the inner sleeve 102, 102' and the outer backing cylinder 104, 104' by sliding the inner sleeve concentrically into the outer backing cylinder after each has been independently fabricated. This assembly process is preferred to be performed, via a difference in the coefficients of thermal expansion between the inner sleeve and the outer backing cylinder, wherein the material of the outer layer 108 of the inner sleeve 102 has a higher coefficient of thermal expansion than that of the coefficient of thermal expansion of the material of the outer backing cylinder 104.

As depicted by way of example using the plastics processing cylinder 100, Figures 9A and 9B show a preferred assembly method. The inside diameter D₁ of the outer backing cylinder 104 is greater than the outside diameter D₂ of the inner sleeve 102 when cold (ie., at or below room temperature), as shown at Figure 9A. When "cold", the inner sleeve 102 is slipped into the outer backing cylinder 104. But, upon heating the diameters D₁, D₂ cross-over each other (ie., now D₂ is greater than or equal to D₁) before reaching work processing temperatures (for example, prior to reaching typical working temperatures of the range of between 650 degrees F to 1,180 degrees F), thereby providing a shrink-fit therebetween which integrates them into a single piece, as shown at Figure 9B. By way of example, assuming inside diameters of the inner sleeve on the order of about one inch to about six inches, a diameter change of about .002 inches to about .011 inches after deducting a maximum recommended clearance of about 0.001 2 inches to about .0023 inches is sufficient to provide the aforesaid shrink-fit with a compression hoop stress of between about 21,100 psi to over 50,000 psi (about 145 Mpa to about 345 Mpa) of working pressure, per a simplified shrink-fit calculation.

Later, if the inner sleeve requires maintenance, servicing or replacement, the operator need merely cool the plastics forming cylinder so as to again provide D₁ > D₂, whereupon the inner sleeve may be slipped out from the outer backing cylinder.

Alternatively to the above assembly by sliding method, the outer layer 108, 108' may be cast in between the inner layer 106, 106' and the outer backing cylinder 104, 104'. While the assembly by sliding method has a servicing advantage in that the inner sleeve is separable from the outer backing cylinder, by casting the outer sleeve in between the inner sleeve and the outer backing cylinder fabrication costs are lowered.

It should be noted that although the assembly process of the pre-fabricated inner sleeve and outer backing cylinder recounted above is preferred, the outer backing cylinder may be formed after successful fabrication of the inner sleeve.

It is preferred for the material of the outer layer of the inner sleeve to have a modulus of elasticity about equal to that of the material of the outer backing cylinder, preferably at about 20 to 30 x 10⁶ psi.

To those skilled in the art to which this invention appertains, the above described preferred embodiment may be subject to change or modification. Such change or modification can be carried out without departing from the scope of the invention, which is intended to be limited only by the scope of the appended claims.

## Claims

1. A plastics processing cylinder comprising:
a composite inner sleeve comprising a cylindrical inner layer and a cylindrical outer layer formed over said inner layer; wherein said outer layer has a first coefficient of thermal expansion; and
an outer backing cylinder concentrically disposed over said inner sleeve, wherein the outer backing cylinder has a second coefficient of thermal expansion;
wherein said first coefficient of thermal expansion is greater than said second coefficient of thermal expansion.

2. The cylinder of Claim 1, wherein said inner layer comprises at least one of a high performance alloy having high strength, high wear resistance and high corrosion resistance and a ceramic composite selected from a first group of materials comprising sintered carbides with between about 88 to about 94 percent carbides, HIPed sintered carbides with between about 88 to about 94 percent carbides, high carbide containing cermets, and ceramic composites.

3. The cylinder of Claim 1, wherein said outer layer is selected from a second group of materials having a coefficient of thermal expansion in the range of about 15.0x10⁻⁶ inch/inch/°C to about 22.0x10⁻⁶ inch/inch/°C.

4. The cylinder of Claim 3, wherein said second group of materials comprises 60Ni-24Fe-16Cr, 35Ni-45Fe-20Cr, 10Ni-18Cr-Fe, and manganese bronze.

5. The cylinder of Claim 1, wherein said outer backing cylinder is selected from a third group of materials having a thermal expansion coefficient in the range of about 10.0x10⁻⁶ inch/inch/°C to about 12.5x10⁻⁶ inch/inch/°C and having a high thermal conductivity.

6. The cylinder of Claim 5, wherein said third group of materials comprises a heat treated alloy steel, low alloy, high strength steel, and a high strength bronze alloy.

7. The cylinder of Claim 1, wherein said outer sleeve is cast in between said inner sleeve and said outer backing cylinder.

8. The cylinder of Claim 1, wherein said outer layer has a first thermal coefficient of expansion and said outer backing cylinder has a second thermal coefficient of expansion, and wherein said first thermal coefficient of expansion is greater than said second thermal coefficient of expansion, and wherein said inner sleeve has an outside diameter and said outer backing cylinder has an inside diameter, wherein said inside and outside diameters are selected so that below a first predetermined temperature said outer diameter is less than said inside diameter and above a second predetermined temperature said outer diameter is at least as large as said inside diameter.

9. The cylinder of Claim 1, wherein said outer layer has a modulus of elasticity about equal to that of said outer backing cylinder.

10. The cylinder of Claim 2, wherein said outer layer is selected from a second group of materials having a coefficient of thermal expansion in the range of about 15.0x10⁻⁶ inch/inch/°C to about 22.0x10⁻⁶ inch/inch/°C.

11. The cylinder of Claim 10, wherein said outer backing cylinder is selected from a third group of materials having a thermal expansion coefficient in the range of about 10.0x10⁻⁶ inch/inch/°C to about 12.5x10⁻⁶ inch/inch/°C and having a high thermal conductivity.

12. The cylinder of Claim 11, wherein said second group of materials comprises 60Ni-24Fe-16Cr, 35Ni-45Fe-20Cr, 10Ni-18Cr-Fe, and manganese bronze.

13. The cylinder of Claim 12, wherein said third group of materials comprises a heat treated alloy steel, low alloy, high strength steel, and a high strength bronze alloy.

14. The cylinder of Claim 13, wherein said outer sleeve is cast in between said inner sleeve and said outer backing cylinder.

15. The cylinder of Claim 13, wherein said outer layer has a first thermal coefficient of expansion and said outer backing cylinder has a second thermal coefficient of expansion, and wherein said first thermal coefficient of expansion is greater than said second thermal coefficient of expansion, and wherein said inner sleeve has an outside diameter and said outer backing cylinder has an inside diameter, wherein said inside and outside diameters are selected so that below a first predetermined temperature said outer diameter is less than said inside diameter and above a second predetermined temperature said outer diameter is at least as large as said inside diameter.

16. A method for providing and servicing a plastics processing cylinder, comprising the steps of:
firstly forming a cylindrical inner layer of a first selected alloy;
secondly forming a cylindrical outer layer of a second selected alloy abuttingly around the inner layer to thereby fabricate a composite inner sleeve;
thirdly forming an outer backing cylinder of a third selected material; and
inserting the inner sleeve concentrically into the outer backing cylinder;
wherein said outer layer has a first thermal coefficient of expansion and said outer backing cylinder has a second thermal coefficient of expansion, and wherein said first thermal coefficient of expansion is greater than said second thermal coefficient of expansion, and wherein said inner sleeve has an outside diameter and said outer backing cylinder has an inside diameter, wherein said inside and outside diameters are selected so that below a first predetermined temperature said outer diameter is less than said inside diameter and above a second predetermined temperature said outer diameter is at least as large as said inside diameter.

17. The method of Claim 16, wherein said step of inserting further comprises applying a temperature less than the first predetermined temperature.

18. The method of Claim 17, wherein after said step of inserting, further comprising applying a temperature above the second predetermined temperature to thereby cause said inner sleeve to shrink-fit in relation to said outer backing cylinder.

19. The method of Claim 18, after said step of applying a temperature above the first predetermined temperature, further comprising:
applying a temperature below the predetermined temperature; and
sliding said inner sleeve outwardly from said outer backing cylinder.

20. A method for providing a plastics processing cylinder, comprising the steps of:
forming a cylindrical inner layer of a first selected alloy;
forming an outer backing cylinder of a second selected material;
inserting the inner sleeve concentrically into the outer backing cylinder; and
casting a cylindrical outer layer of a third selected alloy in between the inner layer and the outer backing cylinder to thereby fabricate a plastics processing cylinder;
wherein said outer layer has a first thermal coefficient of expansion and said outer backing cylinder has a second thermal coefficient of expansion, and wherein said first thermal coefficient of expansion is greater than said second thermal coefficient of expansion.
